# EUROPÄISCHE PATENTANMELDUNG

(11) **EP 1 912 040 A2**
(43) Veröffentlichungstag der Anmeldung: **16.04.2008**
(21) Anmeldenummer: 06022212.2
(22) Anmeldetag: 24.10.2006
(51) Int. Cl.: G01B 21/04

(54) **Verfahren und Vorrichtung zum Messen von Rohren**

(30) Priorität: 12.10.2006 DE 202006015791 U
(71) Anmelder: TeZet Technik AG, 5330 Bad Zurzach (CH)
(72) Erfinder: Leistritz, Klaus, 79790 Küssaberg (DE)
(74) Vertreter: König, Gregor Sebastian

(57) **Zusammenfassung**

Die Erfindung betrifft eine Vorrichtung zum Messen von Rohren mit einer Fixiereinrichtung und einer Messeinrichtung, wobei die Fixiereinrichtung derart ausgebildet ist, dass sie auf dem Rohr angeordnet werden kann.

## Beschreibung

Die Erfindung betrifft ein Verfahren und eine Vorrichtung zum Messen von Rohren oder anderen Langkörpern, insbesondere von gebogenen Rohren.

Herkömmlich wird mit Mitteln, wie Zollstock und Winkelmesser gemessen, was jedoch im industriellen Bereich zu langwierig ist und die Weiterbearbeitung der gemessenen Rohrdaten in einem CAD Programm erschwert, da jede Koordinate einzeln in das Programm eingegeben werden muss, was nicht nur Zeit kostet, sondern auch eine Fehlerquelle darstellt. Im Stand der Technik sind Verfahren und Vorrichtungen bekannt, die Messdaten elektronisch aufnehmen und auf berührungslosen Messsystemen oder einer berührenden Messung basieren können. Bei der berührenden Messung wird beispielsweise ein ortsfester Messarm an verschiedene Punkte des zu messenden Rohres herangeführt. Der Messarm kann in drei Ebenen beweglich sein und zusätzlich eine Rotationsachse enthalten und besitzt dann Messaufnehmer an seinen Gelenken, die die Bewegungen in verschiedenen Freiheitsgraden aufnehmen und einem Aufzeichnungsgerät, beispielsweise einem PC, zuführen.

Bei der Durchführung der Messung wird das Rohr meist auf einem Messtisch fixiert und die Vermessung auf dem Messtisch durchgeführt. Ist das Rohr nicht ohne weiteres beweglich, weil beispielsweise ein eingebautes oder langes oder schweres Rohr vermessen werden soll, kann der Messarm oder eine andere Messeinrichtung auch auf einem Stativ fixiert werden, um eine ortsfeste Positionierung zu erreichen. Der Einsatz eines Stativs für die Messvorrichtung verlangt aber zunächst den Aufbau eines solchen und erlaubt je nach Umgebung nur eine unsichere Messung mangels ausreichender Fixierungsmöglichkeiten. So ist beispielsweise das Messen auf einer Baustelle häufig mit der Schwierigkeit einer mangelnden Fixierungsmöglichkeit der Messeinrichtung behaftet. Des weiteren muss für mehrere beabstandete Messungen jeweils eine neue Messposition geschaffen werden. Dies bedeutet aber entweder, das Rohr auf dem Messtisch bewegen zu müssen, oder das Stativ neu aufbauen zu müssen. Alternativ sind Vorrichtungen bekannt, bei denen Messgeräte auf einer neben dem Objekt entlanglaufenden Schiene montiert sind, so dass eine definierte Messung über eine größere Distanz möglich ist. In allen Fällen ist insbesondere die Messung von langen oder schweren Rohren aufwendig und ungenau.

Der Erfindung liegt nun die Aufgabe zugrunde, eine Vorrichtung und ein Verfahren zu schaffen, die das Messen von Rohren oder anderen Langkörpern erleichtern.

Die Aufgabe wird gelöst durch eine Vorrichtung und ein Verfahren gemäß den unabhängigen Ansprüchen. Vorteilhafte Ausgestaltungen sind Gegenstand der abhängigen Ansprüche.

Der Erfindung liegt der Gedanke zugrunde, die Messeinrichtung, beispielsweise einen Messarm oder anderen Messgeber, auf dem Rohr oder Langkörper selbst zu fixieren. Hierdurch werden die Schwierigkeiten überwunden, eine definierte Position des Messgebers gegenüber dem Rohr zu schaffen. Die Messeinrichtung lässt sich so auf einfache Art und Weise verschieben oder versetzen und erneut fixieren. Ein Rohr kann so auch im eingebauten Zustand ohne weiteres vermessen werden.

Unter dem Begriff "Rohr" ist erfindungsgemäß vorzugsweise jeder beliebig ausgestaltete Langkörper, insbesondere lange Hohlkörper zu verstehen. Unter dem Begriff "Mess-Schlitten" ist erfindungsgemäß jede Vorrichtung zu verstehen, die sich als Fixierungsbasis für eine Mess-Einrichtung bzw. einen Messarm eignet und die vorzugsweise verfahrbar ausgebildet ist. Der Begriff "Messarm" wird stellvertretend für jede geeignete berührende oder berührungslose Messvorrichtung verwendet. Die Verwendung des Singular in der Beschreibung oder in den Ansprüchen stellt keine Beschränkung dar und der Begriff "ein" oder "eine(r)" stellt einen unbestimmten Artikel dar und ist nicht enumerativ zu verstehen.

Vorzugsweise ist die erfindungsgemäße Vorrichtung als Mess-Schlitten ausgebildet, der auf das zu messende Objekt aufgesetzt werden kann. Der Mess-Schlitten kann verfahrbar sein und Rollen aufweisen, um ein problemloses Bewegen auf dem Rohr zu erlauben. Das Bewegen kann dabei, je nach Ausgestaltung, in Längsrichtung und/oder um das Rohr herum möglich sein und manuell oder automatisiert, z.B. durch Fernsteuerung oder Robotertechnik erfolgen. Zudem ist der Mess-Schlitten nicht nur auf geraden Rohrabschnitten anwendbar, sondern kann auch in Bögen und Übergängen von geraden Rohrstücken zu Bögen oder in Übergängen von einem Bogen zu einem anderen Bogen (Bogen-in-Bogen) verwendet werden. Die Positionierung des Messarmes auf dem Mess-Schlitten kann variabel sein, so dass der Messarm an verschiedenen Stellen des Mess-Schlittens befestigt sein kann. Der Messarm kann aber auch Bestandteil des Mess-Schlittens sein.

Durch den erfindungsgemäß auf das Objekt aufgesetzten Mess-Schlitten lassen sich Messungen komfortabel durchführen. Der Einsatz des Schlittens vereinfacht und verkürzt den eigentlichen Messvorgang, weil der Schlitten zu jedem anzuwählenden Messpunkt auf dem Objekt rollen kann. Die Schlittenkonstruktion ist darüber hinaus kostengünstiger, als aus dem Stand der Technik bekannte Konstruktionen, bei denen Messgeräte auf neben dem Objekt entlanglaufenden Schienen montiert sind.

Die Erfindung erlaubt insbesondere ein kostengünstiges Messen von langen und dicken Rohren und dies, je nach Ausbildung, auch in verschiedenen Ebenen. Insbesondere bei Verwendung eines Schlittens lässt sich jeder anzuwählende Messpunkt auf dem Objekt problemlos anfahren, ohne dass beispielsweise die Länge eines Messarmes eine Begrenzung darstellen würde.

Die Erfindung wird nachfolgend anhand eines in der Zeichnung dargestellten Ausführungsbeispiels des näheren erläutert.

In der Zeichnung zeigen:

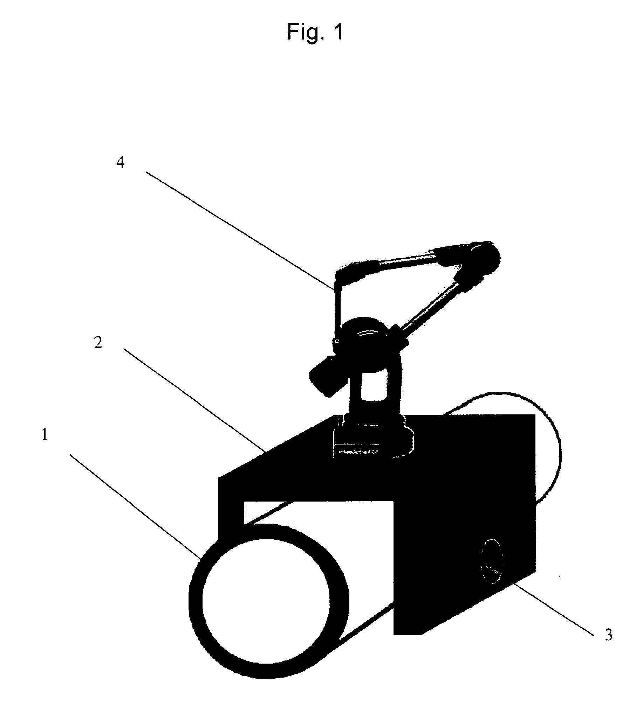

- Fig. 1:: Eine Vorderansicht einer erfindungsgemäßen Messvorrichtung mit Schlitten und Messarm.

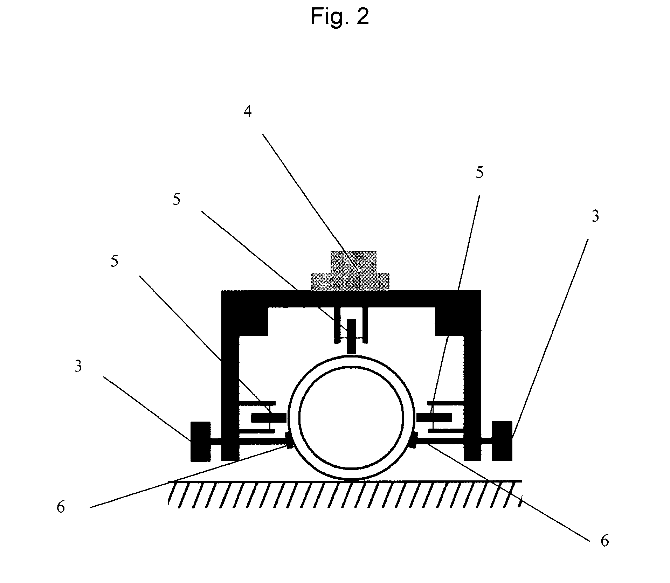

- Fig. 2:: Die Messvorrichtung der Figur 1 als Schnittdarstellung.
- Fig. 3:: Eine schematische Darstellung der Messvorrichtung der Fig. 1.

Auf einem Rohr 1 ist ein Mess-Schlitten 2 mit einem Messarm 4 angeordnet. Der Mess-Schlitten 2 weist Zwingen 3, 6 zur Fixierung und Bedienung des Mess-Schlittens 2 auf. Auf dem Mess-Schlitten 2 ist ein Messarm 4 angeordnet, mit dem die Messung der Rohrdaten nach Positionierung des Mess-Schlittens oder auch während der Bewegung des Mess-Schlittens durchgeführt werden kann. Der Mess-Schlitten 2 weist Rollen 5 auf, mit denen der Mess-Schlitten 2 auf dem Rohr 1 bewegt werden kann. Dies kann manuell oder mit Hilfe eines Antriebs (nicht dargestellt) geschehen. Mit Zwingen 3, 6 lässt sich der Mess-Schlitten 2 in einer gewählten Position fixieren, um genaue Messergebnisse zu erzielen.

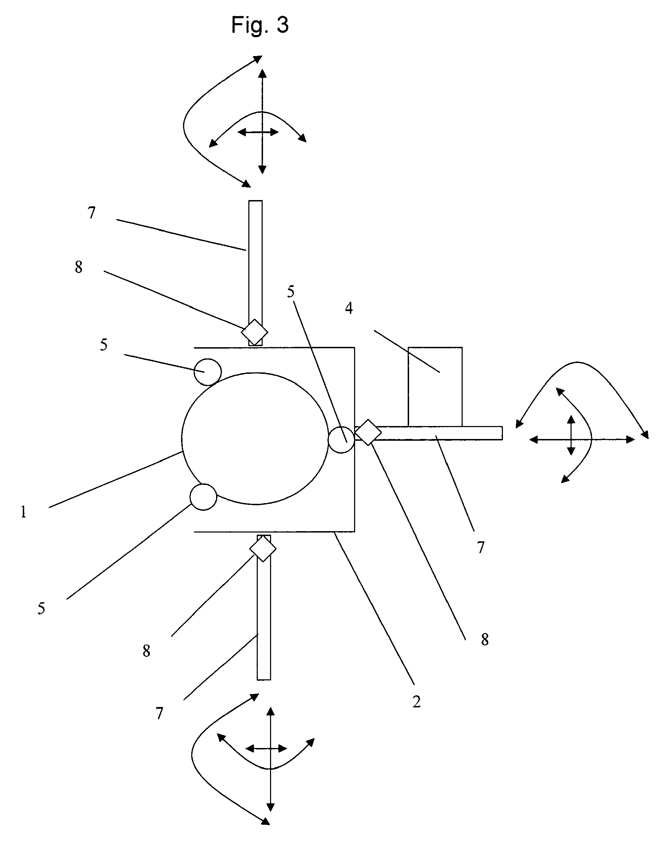

In der in Figur 3 schematisch dargestellten Ausführungsform weist der Mess-Schlitten ferner einen Adapter 7, 8 auf, der aus einer Befestigungsplatte 7 für den Messarm und einem Fixiergelenk 8 besteht. So lässt sich der Messarm beliebig positionieren.

Zur Messung wird zunächst der Mess-Schlitten 2 auf dem Rohr 1 und dann der Messarm 4 auf dem Mess-Schlitten 2 montiert. Der Mess-Schlitten 2 mit Messarm 4 wird auf das Rohr 1 aufgesetzt, und ist dann auf dem Rohr verfahrbar. Der Mess-Schlitten kann mit seinen Rollen 5 und den Zwingen 3, 6 auch unterhalb der Mittellinie des zu messenden Rohres angeordnet werden. Der Mess-Schlitten 2 ist aufgrund der Variabilität der Zwingen 3, 6 und der Rollen 5 für verschiedene Rohrdurchmesser einsetzbar. Der Mess-Schlitten 2 kann dann zur Messung manuell oder durch einen Antrieb, beispielsweise mit Fernsteuerung, über das Rohr 1 an die gewünschte Position bewegt werden, um dort mittels der Zwingen 3, 6 fixiert zu werden und eine Messung durchzuführen. Während des Verschiebens des Mess-Schlittens 2 kann der Messarm 4 jeweils wieder in ein neues Standort-Koordinatensystem gebracht werden, beispielsweise um anders nicht erreichbare Messziele zu erreichen. Wenn das Rohr 1 länger als die maximale Reichweite eines Messarmes 4 ist, können auf dem Rohr 1 Fixpunkte (z.B. über angekörnte Magnetscheiben) definiert und in einer beliebigen Reihenfolge mit dem Messarm 4 erfasst werden. Dabei wird der Messarm 4 verschoben und die Punkte in der vorherigen Reihenfolge erneut aufgenommen. Die Koordinatensysteme werden dabei zur Deckung gebracht, so dass eine unterbrechungsfreie Messung von langen Rohren möglich ist.

Das Rohr 1 kann auf diese Weise messtechnisch erfasst werden, während die Software die aufgenommenen Daten verarbeitet und eine Weiterbearbeitung für die Qualitätskontrolle oder zur weiteren Fertigung digital möglich ist.

## Patentansprüche

1. Vorrichtung zum Messen von Rohren mit einer Fixiereinrichtung 2 und einer Messeinrichtung 4, **dadurch gekennzeichnet, dass** die Fixiereinrichtung 2 derart ausgebildet ist, dass sie auf dem Rohr 1 angeordnet werden kann.

2. Vorrichtung nach Anspruch 1, **dadurch gekennzeichnet, dass** die Messeinrichtung 4 auf dem Rohr 1 verfahrbar ist.

3. Vorrichtung nach Anspruch 1 oder 2, **dadurch gekennzeichnet, dass** die Messeinrichtung 4 variabel auf der Fixiereinrichtung 2 angeordnet ist.

4. Vorrichtung nach einem der vorhergehenden Ansprüche, **dadurch gekennzeichnet, dass** die Fixiereinrichtung 2 Rollen 5 aufweist.

5. Vorrichtung nach einem der vorhergehenden Ansprüche, **dadurch gekennzeichnet, dass** die Fixiereinrichtung 2 einen Antrieb aufweist.

6. Vorrichtung nach einem der vorhergehenden Ansprüche, **dadurch gekennzeichnet, dass** die Messeinrichtung 4 Bestandteil der Fixiereinrichtung 2 ist.

7. Verfahren zum Messen von Rohren, **dadurch gekennzeichnet, dass** eine Messeinrichtung 4 zur Messung auf dem Rohr oder Langkörper fixiert wird.

8. Verfahren nach Anspruch 7, **dadurch gekennzeichnet, dass** die Messeinrichtung manuell, automatisch und/oder mit einer Fernsteuerung zu verschiedenen Mess-Stellen verfahren wird.

9. Verfahren nach Anspruch 7 oder 8, **dadurch gekennzeichnet, dass** die Messung in verschiedenen Ebenen erfolgt.
